# EUROPEAN PATENT APPLICATION

(11) **EP 3 422 643 A1**
(43) Date of publication of application: **02.01.2019**
(21) Application number: 16891186.5
(22) Date of filing: 12.08.2016
(51) Int. Cl.: H04L 12/711

(54) **METHOD AND APPARATUS FOR SENDING MESSAGE**

(30) Priority: 26.02.2016 CN 201610109797
(71) Applicant: ZTE Corporation, Shenzhen, Guangdong 518057 (CN)
(72) Inventor: CHEN, Ran, Shenzhen Guangdong 518057 (CN); PENG, Shaofu, Shenzhen Guangdong 518057 (CN); LI, Qingning, Shenzhen Guangdong 518057 (CN)
(74) Representative: Petit, Maxime
(86) International application number: PCT/CN2016/094965
(87) International publication number: WO 2017/143738

(57) **Abstract**

Disclosed are a method and apparatus for sending a message. The method includes: determining a destination BFER to which a message is sent; determining whether a failure has occurred in a main NBR which sends the message to the destination BFER; and sending the message by utilizing a standby NBR which sends the message to the destination BFER in the case of determining that a failure has occurred in the main NBR. The problem existing in the existing art that a link-based or node-based protection cannot be provided for message transmission in BIER is solved, thereby achieving the effect of providing the link-based or node-based protection to the message transmission in the BIER so as to guarantee the reliable transmission of the message in the BIER.

## Description

### TECHNICAL FIELD

The present application relates, but is not limited, to the field of communication, and in particular, relates to a method and an apparatus for sending a message.

### BACKGROUND

With the rapid development of the Software Defined Network (SDN) technology and the Network Function Virtualization (NFV) in recent years, network deployment controllability has been continuously enhanced, and control complexity has been increased accordingly. Control means for intermediate networks, particularly a core network and an aggregation network, have become more and more detailed and complicated in order to adapt to different services and satisfy different deployment requirements. As for multicast applications, such as Multicast Virtual Private Network (MVPN) and Internet Protocol Television (IPTV), the required number of intermediate network node states has increased exponentially.

To this end, a new technology for constructing multicast forwarding paths, called Bit Indexed Explicit Replication (BIER) is proposed. The BIER technology, by completely reforming a forwarding layer, can significantly reduce protocol complexity and intermediate states of an intermediate network. Simplifying Network forwarding into being performed based merely on bit position, which subverts the conventional Internet Protocol (IP) forwarding, can achieve transmission of multicast traffic in the intermediate network easily without the need to record any multicast traffic state by the intermediate network, significantly facilitating network operation and maintenance.

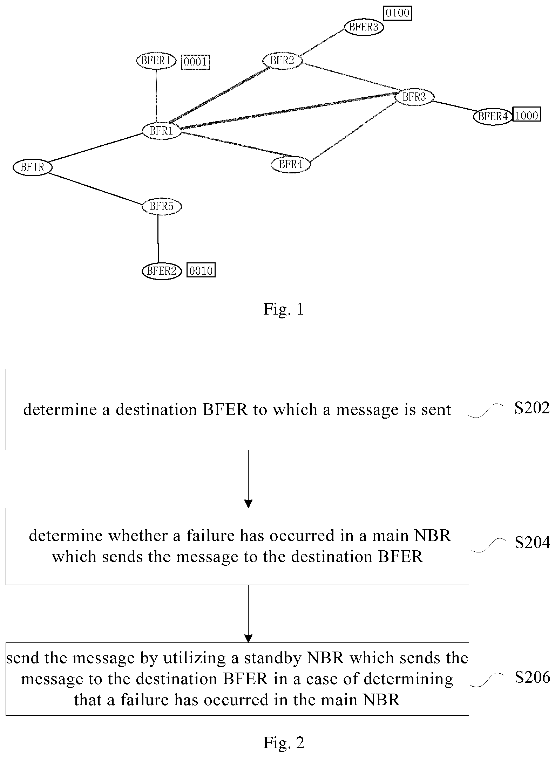

BIER is a bit position-based multicast replication technology. In a BIER domain, one bit position, which is globally unique in a whole BIER sub-domain, is assigned to each Bit-Forwarding Egress Router (BFER), and each BFER floods its own bit position in the BIER domain by using an Interior Gateway Protocol (IGP), wherein all of the bit positions form a bitstring, and transmission and routing of data message in the BIER domain depend on the bitstring. When another Bit Forwarding Router (BFR) receives a message header containing BIER, forwarding is performed according to the bitstring carried in the BIER message header and based on a Bit Forwarding Table. Such a principle of performing forwarding based on BIER bit position greatly reduces a cost of network forwarding. For a specific networking diagram, one may refer to Fig. 1, which is a networking diagram of a BIER BIFT in the existing art. As for some multicast applications such as MVPN and IPTV and the like, there are high requirements for reliability of bearer network. However, in the current BIER network, there is no associated BIER protection technology. Hence, it is impossible to provide link-based or node-based protection, and it is impossible to guarantee reliable transmission of messages in the BIER.

As to the problem existing in the existing art that a link-based or node-based protection cannot be provided for message transmission in BIER, no effective solution has been proposed so far.

### SUMMARY

The following is a summary of subject matters described in detail herein. This summary is not intended to limit the protection scope of the claims.

An embodiment of the present disclosure provides a method and an apparatus for sending a message.

According to an aspect of an embodiment of the present disclosure, there is provided a method for sending a message, including: determining a destination Bit-Forwarding Egress Router (BFER) to which a message is sent; determining whether a failure has occurred in a main next-hop Neighbor (NBR) which sends the message to the destination BFER; and sending the message by utilizing a standby NBR which sends the message to the destination BFER in a case of determining that a failure has occurred in the main NBR.

Optionally, determining the destination BFER to which the message is sent includes: determining the destination BFER according to a bitstring, carried by the message, for identifying the BFER.

Optionally, determining the destination BFER according to a bitstring, carried by the message, for identifying the BFER includes: determining the destination BFER according to a bit position with a value of 1 detected from lower bits to higher bits in the bitstring.

Optionally, sending the message by utilizing the standby NBR which sends the message to the destination BFER includes: processing a first bitstring, carried by the message sent by a Bit Forwarding Router (BFR) that is to forward the message, into a second bitstring, by performing an AND operation on the first bitstring, a Forwarding Bit Mask (FBM) corresponding to the main NBR, and a FBM corresponding to the standby NBR; and sending the message to a standby NBR of the BFR that is to forward the message, wherein the second bitstring is used by the standby NBR to send the message according to the second bitstring.

Optionally, after determining whether a failure has occurred in the main NBR which sends the message to the destination BFER, the method further includes: sending the message by utilizing the main NBR in a case of determining that no failure has occurred in the main NBR.

Optionally, sending the message by utilizing the main NBR includes: processing a first bitstring, carried by the message sent by a Bit Forwarding Router (BFR) that is to send the message, into a third bitstring, by performing an AND operation on the first bitstring and a FBM corresponding to the main NBR; and sending the message to a main NBR of the BFR that is to forward the message, wherein the third bitstring is used by the main NBR to send the message according to the third bitstring.

Optionally, after sending the message, the method further includes: determining a difference value between the first bitstring and all bitstrings obtained after performing all of the bitstring processings on the BFR that is to forward the message; in a case where the difference value is not zero, repeatedly performing steps of: determining a destination Bit-Forwarding Egress Router (BFER) to which a message is sent; determining whether a failure has occurred in a main next-hop Neighbor (NBR) which sends the message to the destination BFER; and sending the message by utilizing a standby NBR which sends the message to the destination BFER in a case of determining that a failure has occurred in the main NBR.

Optionally, determining the destination BFER to which the message is sent includes: determining at least two effective BFERs to which the standby NBR can reach, wherein the effective BFER is the destination BFER to which the message is to be sent; sending the message by utilizing a standby NBR which sends the message to the destination BFER includes: processing an original bitstring carried by the message into a fourth bitstring, wherein the fourth bitstring is configured to identify the at least two effective BFERs; and sending the message to the standby NBR, wherein the fourth bitstring is used by the standby NBR to send the message to the at least two effective BFERs according to the fourth bitstring.

Optionally, processing an original bitstring carried by the message into a fourth bitstring includes: determining all bitstrings carried by the message to be sent to the standby NBR, wherein each of the bitstrings carried by the message to be sent to the standby NBR is a bitstring subjected to a first bitstring processing, and the first bitstring processing includes performing an AND operation on a bitstring carried by the message to be sent to the standby NBR before subjected to the bitstring processing, a Forwarding Bit Mask FBM corresponding to the main NBR and a FBM corresponding to the standby NBR; combining all bitstrings carried by the message to be sent to the standby NBR into a fourth bitstring; and processing the original bitstring carried by the message into the fourth bitstring.

Optionally, determining the destination BFER to which the message is sent includes: determining at least two effective BFERs to which the main NBR can reach, wherein the effective BFER is the destination BFER to which the message is to be sent; and sending the message by utilizing the main NBR includes: processing an original bitstring carried by the message into a fifth bitstring, wherein the fifth bitstring is configured to identify the at least two effective BFERs; and sending the message to the main NBR, wherein the fifth bitstring is used by the main NBR to send the message to the at least two effective BFERs according to the fifth bitstring.

Optionally, processing an original bitstring carried by the message into a fifth bitstring includes: determining all bitstrings carried by the message to be sent to the main NBR, wherein each of the bitstrings carried by the message to be sent to the main NBR is a bitstring subjected to a second bitstring processing, and the second bitstring processing includes performing an AND operation on a bitstring carried by the message to be sent to the main NBR before subjected to the bitstring processing and a FBM corresponding to the main NBR; combining all bitstrings carried by the message to be sent to the standby NBR into the fifth bitstring; and processing the original bitstring carried by the message into the fifth bitstring.

According to another aspect of an embodiment of the present disclosure, there is provided a apparatus for sending a message, including: a determining module, configured to determine a destination Bit-Forwarding Egress Router (BFER) to which a message is sent; a judging module, configured to determine whether a failure has occurred in a main next-hop NBR which sends the message to the destination BFER; and a sending module, configured to send the message by utilizing a standby NBR which sends the message to the destination BFER in a case where the judging module determines that a failure has occurred in the main NBR.

According to another aspect of an embodiment of the present disclosure, there is provided a computer readable storage medium storing computer readable instructions which, when executed by a processor, implement the above method.

According to embodiments of the present disclosure, a method is employed which includes: determining a destination BFER to which a message is sent; determining whether a failure has occurred in a main next-hop NBR which sends the message to the destination BFER; and sending the message by utilizing a standby NBR which sends the message to the destination BFER in a case of determining that a failure has occurred in the main NBR. The method solves the problem existing in the existing art that a link-based or node-based protection cannot be provided for message transmission in the BIER, thereby achieving the effect of providing the link-based or node-based protection to the message transmission in the BIER so as to guarantee the reliable transmission of the message in the BIER.

Other aspects may be obvious after reading and understanding the accompanying drawings and the detailed description.

### BRIEF DESCRIPTION OF THE DRAWINGS

Fig. 1 is a networking diagram of a BIER BIFT in the existing art;
Fig. 2 is a flowchart of a method for sending a message according to an embodiment of the present disclosure;
Fig. 3 is a diagram of forwarding a BIER BIFT message according to Specific Embodiment 1 of the present application;
Fig. 4 is a diagram of forwarding a BIER message after a failure has occurred in a main NBR according to Specific Embodiment 1 of the present application;
Fig. 5 is a BIFT forwarding table on BFR1 according to Specific Embodiment 1 of the present application;
Fig. 6 is a flowchart according to Specific Embodiment 1 of the present application;
Fig. 7 is a diagram of forwarding a BIER BIFT message according to Specific Embodiment 2 of the present application;
Fig. 8 is a diagram of forwarding a BIER message after a failure has occurred in a main NBR according to Specific Embodiment 2 of the present application;
Fig. 9 is a BIFT forwarding table on BFIR according to Specific Embodiment 2 of the present application;
Fig. 10 is a flowchart according to Specific Embodiment 2 of the present application;
Fig. 11 is a structural block diagram of an apparatus for sending a message according to an embodiment of the present disclosure.

### DETAILED DESCRIPTION

The present disclosure will be described in detail below with reference to the accompanying drawings and in conjunction with the embodiments. It should be noted that, the embodiments and features in the embodiments in the present application may be combined to one another without any conflict.

It is to be noted that the terms "first", "second" and so on used in the description, claims and the above drawings of the present disclosure serve to distinguish similar objects, and are not necessarily intended to describe particular order or sequence.

The present embodiment provides a method for sending a message. Fig. 2 is a flowchart of a method for sending a message according to an embodiment of the present disclosure. As shown in Fig. 2, the flowchart includes the following steps S202-S206.

At step S202, a destination BFER to which a message is sent is determined.

At step S204, whether a failure has occurred in a main next-hop Neighbor (NBR) which sends the message to the destination BFER is determined.

At Step S206, the message is sent by utilizing a standby NBR which sends the message to the destination BFER in a case of determining that a failure has occurred in the main NBR.

It may be a Bit-Forwarding Ingress Router (BFIR) or a BFR that performs the above operations. The BFR may detect that a failure has occurred at a link or node by Bidirectional Forwarding Detection (BFD), PING or interface down, or the like.

In the present embodiment, a commonly used sending NBR (corresponding to the above main NBR) of the message may be configured with a protection path (corresponding to the above standby NBR), so that when a failure occurs in the commonly used sending NBR, the configured protection path may be utilized to perform message transmission, thus increasing reliability of the message transmission, solving the problem existing in the existing art that a link-based or node-based protection cannot be provided for message transmission in the BIER, thereby achieving the effect of providing the link-based or node-based protection to the message transmission in the BIER so as to guarantee the reliable transmission of the message in the BIER.

In an optional embodiment, determining the destination BFER to which a message is sent may include: determining the destination BFER according to a bitstring, carried by the message, for identifying the BFER. Here, the bitstring can identify one or more destination BFER.

In an optional embodiment, determining the destination BFER according to a bitstring, carried by the message, for identifying the BFER may include: determining the destination BFER according to a bit position with a value of 1 detected from lower bits to higher bits in the bitstring. For example, when the bitstring is 1100, the destination BFER is a BFER corresponding to 0100 and a BFER corresponding to 1000. In the present embodiment, when a BFIR needs to send a multicast message, or a BFR/BFER receives a multicast message and needs to further forward it, it may take an original BitString (corresponding to the above bitstring carried by the message for identifying the BFER) and check for a Bit Position with a value of 1 from lower bits to higher bits to calculate a BFR-ID, find a corresponding item entry in a Bit Index Forwarding Table (BIFT) according to the BFR-ID, and look up the item to perform forwarding. The BIFT will be introduced in the following embodiment.

In an optional embodiment, sending the message by utilizing a standby NBR which sends the message to the destination BFER may include: processing a first bitstring, carried by a message sent by a BFR that is to forward the message, into a second bitstring, by performing an AND operation on the first bitstring, a Forwarding Bit Mask (FBM) corresponding to the main NBR, and a FBM corresponding to the standby NBR; and sending the message to a standby NBR of the BFR that is to forward the message, wherein the second bitstring is used by the standby NBR to send the message according to the second bitstring. The above main NBR and the standby NBR may be determined by a Bit Index Forwarding Table (BIFT) learned in advance, and a BIFT item may include FBMs corresponding to the main and standby NBRs, wherein Bit Positions included in the FBM corresponding to the main NBR may be all BFERs having this NBR as a main path, and Bit Positions included in the FBM corresponding to the standby NBR may be BFERs having this NBR as a main or standby path. Such an organization of BIFT items can guide a message to be forwarded via the main path preferentially, and when a failure occurs in the main path, the message would then be sent by using the standby path.

In an optional embodiment, after determining whether a failure has occurred in a main NBR which sends the message to the destination BFER, the method may further include: sending the message by utilizing the main NBR in a case of determining that no failure has occurred in the main NBR.

In an optional embodiment, sending the message by utilizing the main NBR may include: processing a first bitstring, carried by a message sent by a BFR that is to send the message, into a third bitstring, by performing an AND operation on the first bitstring and a FBM corresponding to the main NBR; and sending the message to a main NBR of the BFR that is to forward the message, wherein the third bitstring is used by the main NBR to send the message according to the third bitstring.

In an optional embodiment, after sending the message, the method may further include: determining a difference value between the first bitstring and all bitstrings obtained after performing all of the bitstring processings on the BFR that is to forward the message; repeatedly performing steps in Fig. 1 until the difference value is 0 in a case where the difference value is not zero. For example, the first bitstring may be 1100, and all bitstrings obtained after performing all the bitstring processings (assuming two bitstring processings are performed) on the BFR that is to forward the message may be 0100, 1000, then the difference value obtained by deducting 0100 and 1000 from 1100 is 0, in which case the message forwarding ends, and the steps shown in Fig. 1 would not be performed again.

In an optional embodiment, determining a destination BFER to which a message is sent may include: determining at least two effective BFERs to which the standby NBR can reach, wherein the effective BFER is the destination BFER to which the message is to be sent. Sending the message by utilizing a standby NBR which sends the message to the destination BFER may include: processing an original bitstring carried by the message into a fourth bitstring, wherein the fourth bitstring is configured to identify the at least two effective BFERs; and sending the message to the standby NBR, wherein the fourth bitstring is used by the standby NBR to send the message to the at least two effective BFERs according to the fourth bitstring.

In an optional embodiment, processing an original bitstring carried by the message into a fourth bitstring may include: determining all bitstrings carried by the message to be sent to the standby NBR, wherein each of the bitstrings carried by the message to be sent to the standby NBR is a bitstring subjected to a first bitstring processing, and the first bitstring processing includes performing an AND operation on a bitstring carried by the message to be sent to the standby NBR before subjected to the bitstring processing, a FBM corresponding to the main NBR and a FBM corresponding to the standby NBR; combining all bitstrings carried by the message to be sent to the standby NBR into a fourth bitstring; and processing an original bitstring carried by the message into the fourth bitstring. In this embodiment, the operation may be performed by a BFIR, and the original bitstring may be a bitstring carried by a message received by the BFIR (which may be called the most-original bitstring). It can be seen from the foregoing embodiments that, when the BFIR prepares to send a message, it is necessary to process a bitstring in the message (the AND operation described in the foregoing embodiments). After the BFIR finishes a first-time message transmission, it is necessary to remove a bitstring carried by the message in the first-time message transmission from the original bitstring, that is, the current original bitstring is changed compared to the most-original bitstring. When the BFIR performs another message transmission, it performs a bitstring processing based on the changed original bitstring, and so on. In this embodiment, multiple message transmissions from the BFIR to a same standby NBR are combined into one transmission, but a bitstring carried by the message in the one transmission is required to be a sum of the bitstrings carried by the messages in the multiple transmissions in the foregoing embodiments, that is, it is necessary to combine the bitstrings carried by the messages in the multiple transmissions in the foregoing embodiments into the fourth bitstring, so that the standby NBR can send the message to multiple respective destination BFERs according to the combined fourth bitstring. Similar process applies to sending the message by utilizing the main NBR in the following embodiment.

In an optional embodiment, determining a destination BFER to which a message is sent may include: determining at least two effective BFERs to which the main NBR can reach, wherein the effective BFER is the destination BFER to which the message is to be sent. Sending the message by utilizing the main NBR may include: processing an original bitstring carried by the message into a fifth bitstring, wherein the fifth bitstring is configured to identify the at least two effective BFERs; sending the message to the main NBR, wherein the fifth bitstring is used by the main NBR to send the message to the at least two effective BFERs according to the fifth bitstring.

In an optional embodiment, processing an original bitstring carried by the message into a fifth bitstring may include: determining all bitstrings carried by the message to be sent to the main NBR, wherein each of the bitstrings carried by the message to be sent to the main NBR is a bitstring subjected to a second bitstring processing, and the second bitstring processing includes performing an AND operation on a bitstring carried by the message to be sent to the main NBR before subjected to the bitstring processing and a FBM corresponding to the main NBR; combining all bitstrings carried by the message to be sent to the standby NBR into a fifth bitstring; and processing an original bitstring carried by the message into the fifth bitstring.

In the above embodiment, when a BFIR or a BFR/BFER sends a multicast data message, it may cache a BitString, a copy of which is desired to be sent to each of NBRs, until an original BitString (that is, a bitstring carried by the message) is 0, only after which it really starts to send the copy to these NBRs one by one. When the original BitString is 0, the finally copied BitString corresponding to each of the NBRs is the result of combining multiple BitStrings contained in copies described to be sent to the NBR generated by multiple BFR-IDs. As such, there is no need to send a message multiple times to a same NBR, thereby mitigating network congestion and improving resource utilization.

The present disclosure is described below in conjunction with specific embodiments.

### Specific Embodiment 1

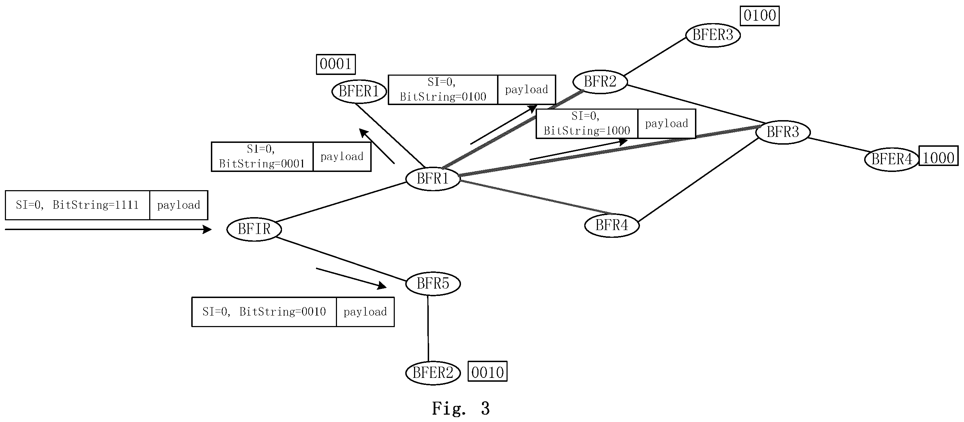

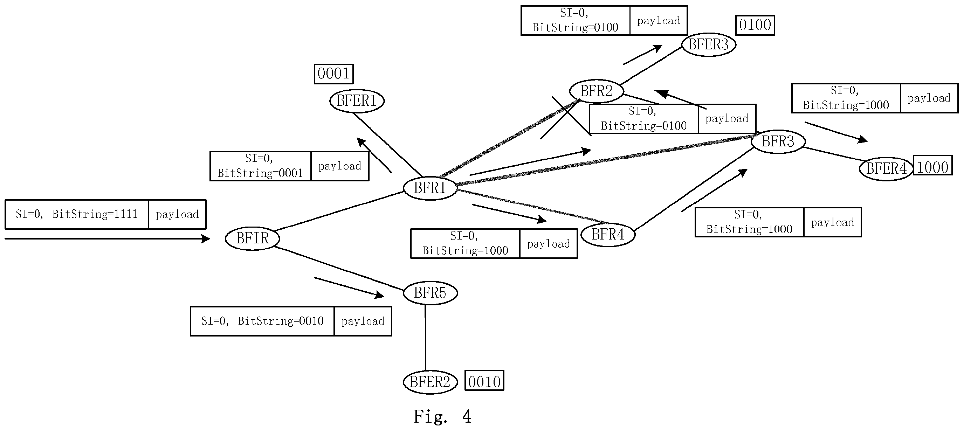

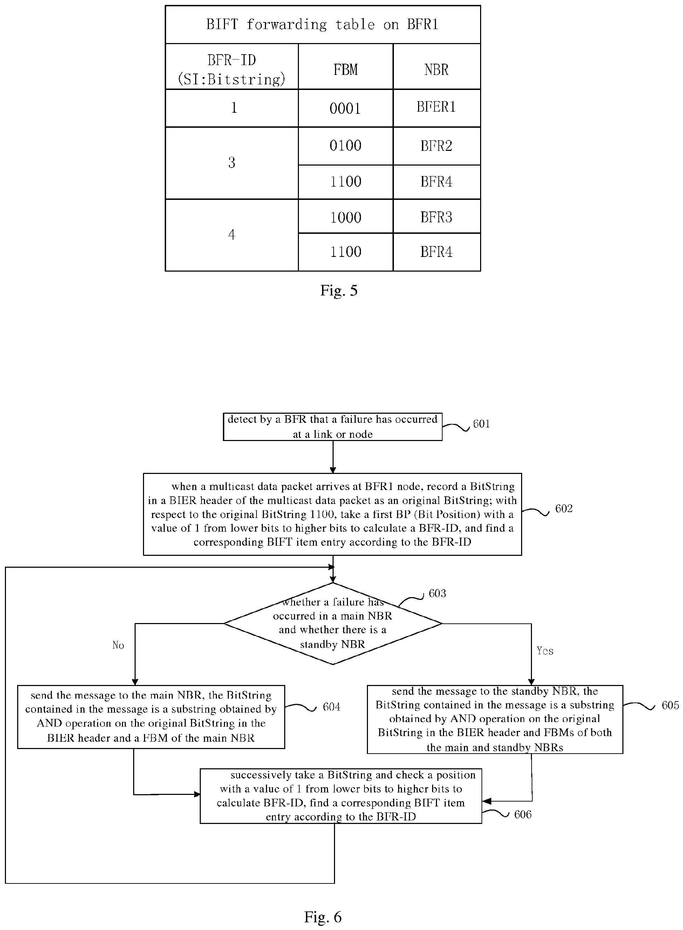

Fig. 3 is a diagram of forwarding a BIER BIFT message according to Specific Embodiment 1 of the present application, Fig. 4 is a diagram of forwarding a BIER message after a failure has occurred in a main NBR according to Specific Embodiment 1 of the present application, and Fig. 5 is a BIFT forwarding table on BFR1 according to Specific Embodiment 1 of the present application. As shown in Figs. 3 and 4, there are two main NBRs and one standby NBR. As shown in Fig. 4, when a failure occurs in a main NBR leading to BFER3 via BFR2, a multicast data packet may arrive at BFER3 via a standby NBR BFR4, while a main NBR leading to BFER4 via BFR3 is still in use since there is no failure. Similarly, when a failure occurs in a main NBR leading to BFER4 via BFR3, a multicast data packet may arrive at BFER4 via a standby NBR BFR4, while a main NBR leading to BFER3 via BFR2 is still in use since there is no failure. Fig. 6 is a flowchart according to Specific Embodiment 1 of the present application. As shown in Fig. 6, the flowchart includes the following steps S601 to S606.

At step S601, a BFR detects that a failure has occurred at a link or node.

The BFR may detect that a failure has occurred at a link or node by BFD, PING or interface down etc.

At step S602, when a multicast data packet (corresponding to the above-described message) arrives at BFR1 node, a BitString in a BIER header of the multicast data packet is recorded as an original BitString; with respect to the original BitString 1100, a first BP (Bit Position) with a value of 1 from lower bits to higher bits is taken to calculate a BFR-ID; and a corresponding BIFT item entry is found according to the BFR-ID.

As shown in Fig. 3, after BFR1 receives a multicast message, the BFR-ID calculated by taking 0100 is 3, and an entry corresponding to the BFR-ID of 3 is found.

At step S603, whether a failure has occurred in a main NBR and whether there is a standby NBR are checked. If no failure has occurred in the main NBR, then the process proceeds to Step S604, and if a failure has occurred in the main NBR and there is a standby NBR, then the process proceeds to Step S605.

At step S604, the message is sent to the main NBR. The BitString contained in the message is a substring obtained by an AND operation on the original BitString in the BIER header and a FBM of the main NBR.

At step S605, the message is sent to the standby NBR. The BitString contained in the message is a substring obtained by an AND operation on the original BitString in the BIER header and FBMs of both the main and standby NBRs at the same time.

As shown in Fig. 4, it is found out that it is necessary to pass through BFR2 to arrive at BFER3, and since BFR1 has detected that a failure has occurred in the path between BFR1 and BFR2, then a standby NBR is used, and an AND operation is performed on the original BitString 1100 in the BIER header and both the main NBR-FBM 0100 and the standby NBR-FBM 1100, resulting in 0100, in which case the message is copied and sent to BFR4, a BitString contained in the copied message is the result 0100 of the above AND operation. The original BitString 1100 will be 1000 after deducting the BitString 0100 contained in the above copied message.

At step S606, a BitString is taken and checked sequentially for a bit position with a value of 1 from lower bits to higher bits to calculate BFR-ID, and a corresponding BIFT item entry is found according to the BFR-ID. Then, the process proceeds to Step S603.

As shown in Fig. 4, the BFR-ID calculated by taking 1000 is 4, an item corresponding to the BFR-ID of 4 is found out, and it is found out that it is necessary to pass through BFR4 to arrive at BFER4. Since there is no failure in the main NBR between BFR1 and BFR3, an AND operation is performed on the BitString 1000 in the BIER header and the main NBR's FBM 1000, resulting in 1000, in which case the message is copied and sent to BFR3, a BitString contained in the copied message is the result 1000 of the above AND operation. The original BitString 1000 will be 0000 after deducting the BitString 1000 contained in the above copied message, which indicates the forwarding is finished.

### Specific Embodiment 2

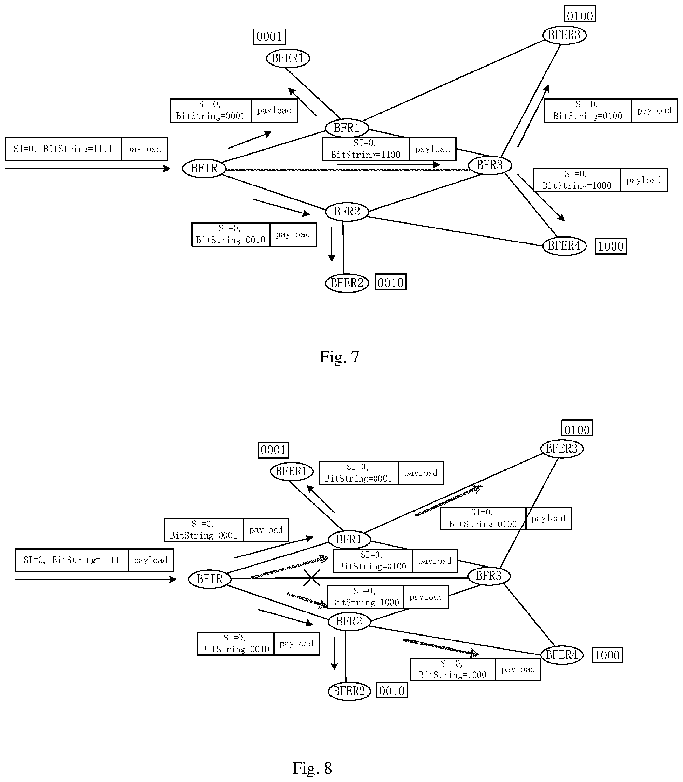

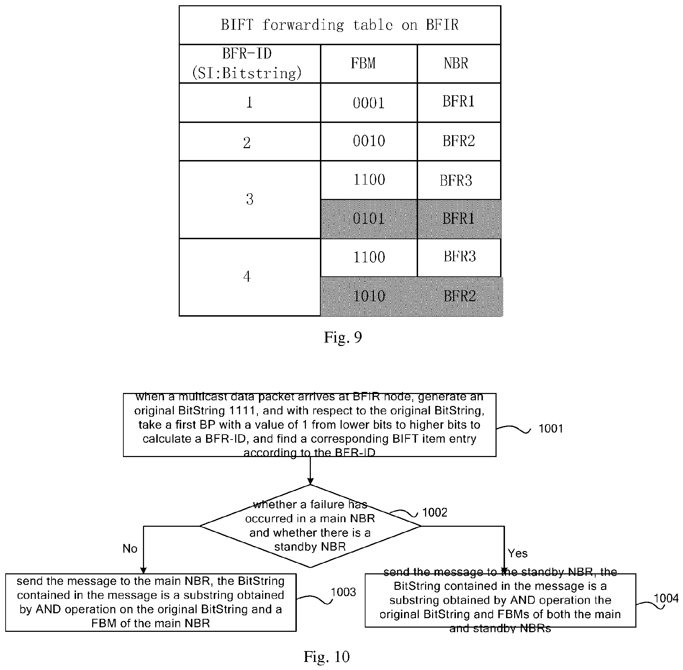

Fig. 7 is a diagram of forwarding a BIER BIFT message according to Specific Embodiment 2 of the present application, Fig. 8 is a diagram of forwarding a BIER message after a failure has occurred in a main NBR according to Specific Embodiment 2 of the present application, and Fig. 9 is a BIFT forwarding table on BFIR according to Specific Embodiment 2 of the present application. As shown in Figs. 7 and 9, there are two standby NBRs. As shown in Fig. 8, when a failure occurs in a main NBR leading to BFER3 via BFR3, a multicast data packet may arrive at BFER3 via a standby NBR BFR1. Similarly, when a failure occurs in a main NBR leading to BFER4 via BFR3, a multicast data packet may arrive at BFER4 via a standby NBR BFR2. Fig. 10 is a flowchart according to Specific Embodiment 2 of the present application, which includes the following steps S1001-S1004.

At step S1001, when a multicast data packet arrives at BFIR node, an original BitString 1111 is generated; and with respect to the original BitString, a first BP with a value of 1 from lower bits to higher bits is taken to calculate a BFR-ID; and a corresponding BIFT item entry is found according to the BFR-ID.

As shown in Fig. 7, after BFIR receives a multicast message, the BFR-ID calculated by taking 0001 is 1, and an entry corresponding to the BFR-ID of 1 is found.

At step S1002, whether a failure has occurred in a main NBR and whether there is a standby NBR are checked. If no failure has occurred in the main NBR, then the process proceeds to Step S1003, and if a failure has occurred in the main NBR and there is a standby NBR, then to the process proceeds to Step S1004.

The BFIR may detect that a failure has occurred at a link or node by BFD, PING or interface down etc.

At step S1003, the message is sent to the main NBR. The BitString contained in the message is a substring obtained by an AND operation on the original BitString and a FBM of the main NBR.

As shown in Fig. 7, an AND operation is performed on 1111 and 0001 and the result is 0001, thus a BitString contained in the message sent to the BFR1 node is 0001. The original BitString 1111 will be 1110 after deducting the BitString 0001 contained in the above copied message.

Similarly, with respect to the original BitString, a first BP with a value of 1 is continuously taken from lower bits to higher bits to calculate a BFR-ID, and a corresponding BIFT item entry is found according to the BFR-ID, that is, an entry corresponding to the BFR-ID of 2. After similar processing as described above, a BitString contained in the message sent to the BFR2 node is 0010. The original BitString 1110 will be 1100 after deducting the BitString 0010 contained in the above copied message.

At step S1004, the message is sent to the standby NBR. The BitString contained in the message is a substring obtained by an AND operation on the original BitString and FBMs of both the main and standby NBRs at the same time.

The BFR-ID calculated by the header node by taking 0100 is 3, and a forwarding entry is found by taking this BFR-ID of 3. Since BFIR has detected that a failure has occurred in the main NBR between BFIR and BFR3, then a standby NBR is used, and an AND operation is performed on the original BitString 1100 and both the main NBR-FBM 1100 and the standby NBR-FBM 0101, resulting in 0100, in which case the message is copied and sent to BFR1, a BitString contained in the copied message is the result 0100 of the above AND operation. The original BitString 1100 will be 1000 after deducting the BitString 0100 contained in the above copied message.

Similarly, with respect to the original BitString, a first BP with a value of 1 from lower bits to higher bits is taken continuously to calculate a BFR-ID, and a corresponding BIFT item entry is found according to the BFR-ID, that is, an entry corresponding to the BFR-ID of 4. After similar processing as described above, a BitString contained in the message sent to the BFR2 node is 1000. The original BitString 1000 will be 0000 after deducting the BitString 1000 contained in the above copied message, which indicates the forwarding is finished.

### Specific Embodiment 3

Specific Embodiment 3 is an optimization of Specific Embodiment 2.

In Specific Embodiment 2, there are two copies sent to BFR1, and the BitStrings contained therein are 0001 and 0100, respectively; likewise, there are two copies sent to BFR2, and the BitStrings contained therein are 0010 and 1000, respectively. On the basis of Specific Embodiment 2, in this embodiment, a BitString corresponding to NBR-BFR1 may be cached, resulting in a combination of 0001 and 0100, that is, 0101; likewise, a BitString corresponding to NBR-BFR2 may be cached, resulting in a combination of 0010 and 1000, that is, 1010.

No copy would be sent before the original BitString becomes 0. When the original BitString becomes 0, a copy containing a BitString of 0101 is sent to NBR-BFR1; and a copy containing a BitString of 1010 is sent to NBR-BFR2.

In light of the foregoing description of the embodiments, a person skilled in the art may clearly understand that the method according to the above-described embodiments may be implemented by means of software plus an essential general-purpose hardware platform, and may also be implemented by hardware, though the former is a better implementation in many cases. Based on this understanding, the essence or the part making a contribution to the prior art of the technical solutions of the present disclosure may be embodied in a form of a software product, the computer software product stored in a storage medium (such as ROM/RAM, a magnetic disc, an optical disc), including a number of instructions to cause a terminal device (which may be a mobile phone, a computer, a server or a network device etc.) to perform the method according to the embodiments of the present invention.

The present embodiment further provides an apparatus for sending a message, the apparatus configured to implement the above-described embodiments and exemplary implementations, of which what has been already described is not repeated herein. The term "module" as used in the following refers to a combination of software and/or hardware which may implement a predetermined function. Although the apparatus described in the following embodiments is better implemented by software, yet implementation by hardware or combination of software and hardware is also possible and conceivable.

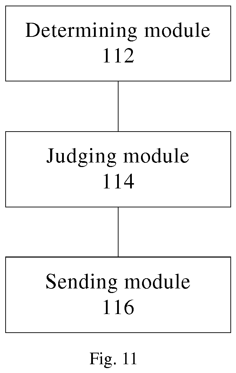

Fig. 11 is a structural block diagram of an apparatus for sending a message according to an embodiment of the present disclosure. As shown in Fig. 11, the apparatus includes a determining module 112, a judging module 114 and a sending module 116, and the apparatus is described below.

The determining module 112 is configured to determine a destination BFER to which a message is sent; the judging module 114 is connected to the determining module 112, and is configured to determine whether a failure has occurred in a main next-hop NBR which sends the message to the destination BFER; and the sending module 116 is connected to the judging module 114, and is configured to send the message by utilizing a standby NBR which sends the message to the destination BFER in a case where the judging module 114 determines that a failure has occurred in the main NBR.

In an optional embodiment, the determining module 112 may determine the destination BFER to which a message is sent by determining the destination BFER according to a bitstring, carried by the message, for identifying the BFER.

In an optional embodiment, the determining module 112 may determine the destination BFER according to a bitstring, carried by the message, for identifying the BFER, by determining the destination BFER according to a bit position with a value of 1 detected from lower bits to higher bits in the bitstring.

In an optional embodiment, the sending module 116 may send the message by utilizing a standby NBR which sends the message to the destination BFER through: processing a first bitstring, carried by a message sent by a BFR that is to forward the message, into a second bitstring, by performing an AND operation on the first bitstring, a FBM corresponding to the main NBR, and a FBM corresponding to the standby NBR; and sending the message to a standby NBR of the BFR that is to forward the message, wherein the second bitstring is used by the standby NBR to send the message according to the second bitstring.

In an optional embodiment, the sending module 116 may be further configured to send the message by utilizing the main NBR in a case where the judging module 114 determines that no failure has occurred in the main NBR which sends the message to the destination BFER.

In an optional embodiment, the sending module 116 may send the message by utilizing the main NBR by: processing a first bitstring, carried by a message sent by a BFR that is to send the message, into a third bitstring, by performing an AND operation on the first bitstring and a FBM corresponding to the main NBR; and sending the message to a main NBR of the BFR that is to forward the message, wherein the third bitstring is used by the main NBR to send the message according to the third bitstring.

In an optional embodiment, the apparatus for sending a message may further include a processing module, which is configured to: after sending the message, determine a difference value between the first bitstring and all bitstrings obtained after performing all of the bitstring processings on the BFR that is to forward the message; in a case where the difference value is not zero, repeatedly performing the steps of: determining a destination BFER to which a message is sent; determining whether a failure has occurred in a main NBR which sends the message to the destination BFER; and sending the message by utilizing a standby NBR which sends the message to the destination BFER in a case of determining that a failure has occurred in the main NBR.

In an optional embodiment, the determining module 112 may include a first determining unit, which is configured to determine at least two effective BFERs to which a next-hop BFR on the standby NBR can reach, wherein the effective BFER is the destination BFER to which the message is to be sent. When sending the message by utilizing a standby NBR which sends the message to the destination BFER, the sending module 116 may include a first sending unit configured to: process an original bitstring carried by the message into a fourth bitstring, wherein the fourth bitstring is configured to identify the at least two effective BFERs; and send the message to the standby NBR, wherein the fourth bitstring is used by the standby NBR to send the message to the at least two effective BFERs according to the fourth bitstring.

In an optional embodiment, the first sending unit may process an original bitstring carried by the message into a fourth bitstring by: determining all bitstrings carried by the message to be sent to the standby NBR, wherein each of the bitstrings carried by the message to be sent to the standby NBR is a bitstring subjected to a first bitstring processing, and the first bitstring processing includes performing an AND operation on a bitstring carried by the message to be sent to the standby NBR before subjected to the bitstring processing, a FBM corresponding to the main NBR and a FBM corresponding to the standby NBR; combining all bitstrings carried by the message to be sent to the standby NBR into a fourth bitstring; processing a first bitstring carried by the message into the fourth bitstring.

In an optional embodiment, the determining module 112 may include a second determining unit configured to determine at least two effective BFERs to which the main NBR can reach, wherein the effective BFER is the destination BFER to which the message is to be sent. When sending the message by utilizing the main NBR, the sending module 116 may include a second sending unit configured to: processing an original bitstring carried by the message into a fifth bitstring, wherein the fifth bitstring is configured to identify the at least two effective BFERs; and sending the message to the main NBR, wherein the fifth bitstring is used by the main NBR to send the message to the at least two effective BFERs according to the fifth bitstring.

In an optional embodiment, the second sending unit may process an original bitstring carried by the message into a fifth bitstring by: determining all bitstrings carried by the message to be sent to the main NBR, wherein each of the bitstrings carried by the message to be sent to the main NBR is a bitstring subjected to a second bitstring processing, and the second bitstring processing includes performing an AND operation on a bitstring carried by the message to be sent to the main NBR before subjected to the bitstring processing and a FBM corresponding to the main NBR; combining all bitstrings carried by the message to be sent to the standby NBR into a fifth bitstring; processing a first bitstring carried by the message into the fifth bitstring.

It is to be noted that the above modules may be implemented by software or hardware. As for the latter, the implementation may be, but is not limited to, in the following ways: the above modules being all located in one processor, or the above modules being located in multiple processors, respectively.

An embodiment of the present disclosure further provides a storage medium. Optionally, in the present embodiment, the storage medium may be configured to store program codes for performing the following steps S1-S3.

At Step S1, a destination BFER to which a message is sent is determined.

At Step S2, whether a failure has occurred in a main NBR which sends the message to the destination BFER is determined.

At Step S3, the message is sent by utilizing a standby NBR which sends the message to the destination BFER in a case of determining that a failure has occurred in the main NBR.

Optionally, in the present embodiment, the storage medium may include but is not limited to various media which can store program codes, such as a USB drive, a Read-Only Memory (ROM), a Random Access Memory (RAM), a removable hard disc, a magnetic disc or an optical disc, or the like.

Optionally, in the present embodiment, a processor may perform steps of the above methods according to program codes stored in the storage medium.

Optionally, specific examples of the present embodiment may refer to examples described in the above embodiments and optional implementations, which are not repeated in the present embodiment herein. It can be seen from the above-described embodiments that, in light of the present application, a specified path for forwarding of certain traffic can be achieved within a BIER network, which remedies a defect that one cannot perform forwarding via a specified path after resource planning of certain traffic in a BIER network. This significantly extends application scenarios and deployment environments of BIER technology, and a function of forwarding along a specified path in a BIER network can be achieved for both multicast traffic and unicast traffic, which has favorable adaptability and prospects for development.

Obviously, a person skilled in the art should understand that, the above-described modules and steps of the present application may be implemented using a general-purpose computing device, and they may be integrated on a single computing device, or distributed over a network consisting of multiple computing devices. Optionally, they may be implemented using a program code executable by a computing device, so that they can be stored in a storage device and executed by the computing device, and in some cases, steps shown or described may be performed in an order different from what is shown herein, or they may be fabricated into respective integrated circuit modules, respectively, or multiple modules or steps of them may be fabricated into a single integrated circuit module. As such, the present application is not limited to any particular combination of hardware and software.

The foregoing merely describes exemplary embodiments of the present application, and is not intended to limit the present application. For a person skilled in the art, the present application may have various alterations and changes. Any modification, equivalent replacement, improvement and the like, made within the spirit and principle of the present application, should be fall within the protection scope of the present application.

### Industrial Applicability

Embodiments of the present disclosure provide a method and an apparatus for sending a message, the method mainly including: determining a destination BFER to which a message is sent; determining whether a failure has occurred in a main next-hop NBR which sends the message to the destination BFER; and sending the message by utilizing a standby NBR which sends the message to the destination BFER in a case of determining that a failure has occurred in the main NBR.

According to embodiments of the present disclosure, a method is employed which includes: determining a destination BFER to which a message is sent; determining whether a failure has occurred in a main next-hop NBR which sends the message to the destination BFER; and sending the message by utilizing a standby NBR which sends the message to the destination BFER in a case of determining that a failure has occurred in the main NBR. The method solves the problem existing in the existing art that a link-based or node-based protection cannot be provided for message transmission in the BIER, thereby achieving the effect of providing the link-based or node-based protection to the message transmission in the BIER so as to guarantee the reliable transmission of the message in the BIER.

## Claims

1. A method for sending a message, comprising:
determining a destination Bit-Forwarding Egress Router, BFER, to which a message is sent;
determining whether a failure has occurred in a main next-hop Neighbor, NBR, which sends the message to the destination BFER; and
sending the message by utilizing a standby NBR which sends the message to the destination BFER in a case of determining that a failure has occurred in the main NBR.

2. The method according to claim 1, wherein the determining the destination BFER to which the message is sent comprises:
determining the destination BFER according to a bitstring, carried by the message, for identifying the BFER.

3. The method according to claim 2, wherein the determining the destination BFER according to a bitstring, carried by the message, for identifying the BFER comprises:
determining the destination BFER according to a bit position with a value of 1 detected from lower bits to higher bits in the bitstring.

4. The method according to claim 1, wherein the sending the message by utilizing the standby NBR which sends the message to the destination BFER comprises:
processing a first bitstring, carried by the message sent by a Bit Forwarding Router, BFR, that is to forward the message, into a second bitstring, by performing an AND operation on the first bitstring, a Forwarding Bit Mask, FBM, corresponding to the main NBR, and a FBM corresponding to the standby NBR; and
sending the message to a standby NBR of the BFR that is to forward the message, wherein the second bitstring is used by the standby NBR to send the message according to the second bitstring.

5. The method according to claim 1, after the determining whether a failure has occurred in the main NBR which sends the message to the destination BFER, further comprising:
sending the message by utilizing the main NBR in a case of determining that no failure has occurred in the main NBR.

6. The method according to claim 5, wherein the sending the message by utilizing the main NBR comprises:
processing a first bitstring, carried by the message sent by a Bit Forwarding Router, BFR, that is to send the message, into a third bitstring, by performing an AND operation on the first bitstring and a FBM corresponding to the main NBR; and
sending the message to a main NBR of the BFR that is to forward the message, wherein the third bitstring is used by the main NBR to send the message according to the third bitstring.

7. The method according to claim 4 or 6, after the sending the message, further comprising:
determining a difference value between the first bitstring and all bitstrings obtained after performing all of the bitstring processings on the BFR that is to forward the message; and
repeatedly performing steps of the method according to claim 1 in a case where the difference value is not zero.

8. The method according to claim 1, wherein
the determining the destination BFER to which the message is sent comprises: determining at least two effective BFERs to which the standby NBR is able to reach, wherein the effective BFER is the destination BFER to which the message is to be sent; and
the sending the message by utilizing a standby NBR which sends the message to the destination BFER comprises: processing an original bitstring carried by the message into a fourth bitstring, wherein the fourth bitstring is configured to identify the at least two effective BFERs; and sending the message to the standby NBR, wherein the fourth bitstring is used by the standby NBR to send the message to the at least two effective BFERs according to the fourth bitstring.

9. The method according to claim 8, wherein the processing an original bitstring carried by the message into a fourth bitstring comprises:
determining all bitstrings carried by the message to be sent to the standby NBR, wherein each of the bitstrings carried by the message to be sent to the standby NBR is a bitstring subjected to a first bitstring processing, and the first bitstring processing comprises: performing an AND operation on a bitstring carried by the message to be sent to the standby NBR before subjected to a bitstring processing, a Forwarding Bit Mask, FBM, corresponding to the main NBR and a FBM corresponding to the standby NBR;
combining all bitstrings carried by the message to be sent to the standby NBR into a fourth bitstring; and
processing the original bitstring carried by the message into the fourth bitstring.

10. The method according to claim 5, wherein
the determining the destination BFER to which the message is sent comprises: determining at least two effective BFERs to which the main NBR is able to reach, wherein the effective BFER is the destination BFER to which the message is to be sent; and
the sending the message by utilizing the main NBR comprises: processing an original bitstring carried by the message into a fifth bitstring, wherein the fifth bitstring is configured to identify the at least two effective BFERs; and sending the message to the main NBR, wherein the fifth bitstring is used by the main NBR to send the message to the at least two effective BFERs according to the fifth bitstring.

11. The method according to claim 10, wherein the processing an original bitstring carried by the message into a fifth bitstring comprises:
determining all bitstrings carried by the message to be sent to the main NBR, wherein each of the bitstrings carried by the message to be sent to the main NBR is a bitstring subjected to a second bitstring processing, and the second bitstring processing comprises: performing an AND operation on a bitstring carried by the message to be sent to the main NBR before subjected to a bitstring processing and a FBM corresponding to the main NBR;
combining all bitstrings carried by the message to be sent to the standby NBR into the fifth bitstring; and
processing the original bitstring carried by the message into the fifth bitstring.

12. An apparatus for sending a message, comprising:
a determining module, configured to determine a destination Bit-Forwarding Egress Router, BFER, to which a message is sent;
a judging module, configured to determine whether a failure has occurred in a main next-hop Neighbor, NBR, which sends the message to the destination BFER; and
a sending module, configured to send the message by utilizing a standby NBR which sends the message to the destination BFER in a case where the judging module determines that a failure has occurred in the main NBR.

13. A computer readable storage medium storing computer readable instructions which, when executed by a processor, cause the processor to perform the method according to any one of claims 1 to 11.
